# EUROPEAN PATENT APPLICATION

(11) **EP 1 686 755 A1**
(43) Date of publication of application: **02.08.2006**
(21) Application number: 06001630.0
(22) Date of filing: 26.01.2006
(51) Int. Cl.: H04L 29/06

(54) **Filtering method and firewall system**

(30) Priority: 27.01.2005 JP 2005019759
(71) Applicant: NEC Corporation, Minato-ku Tokyo (JP)
(72) Inventor: Yajima, Kenich, Minato-ku, Tokyo (JP); Momose, Tsuyoshi, Minato-ku, Tokyo (JP)
(74) Representative: Glawe, Delfs, Moll

(57) **Abstract**

A firewall device that executes filtering of a packet for an internal network to which a moving terminal belongs is set so that a control packet related with registration of position information about the moving terminal is allowed to pass. When the moving terminal is connected to an external network, the moving terminal transmits a control packet including position information about the self terminal to a communication terminal as communication destination. The communication terminal registers the position information included in the control packet from the moving terminal transferred from the firewall device and posts the position information to the firewall device. The firewall device updates the position information about the moving terminal based on the posted position information, and sets permission for the packet to pass between the moving terminal and the communication terminal.

## Description

### BACKGROUND OF THE INVENTION

### 1. Field of the Invention

The present invention relates to a filtering method of a firewall function that prevents inappropriate packets from flowing into a communication network. The invention particularly relates to the filtering method which is compatible with a moving terminal which moves inside and outside of the communication network.

### 2. Description of the Related Art

Conventionally, in order to prevent inappropriate packets from flowing from outside into a communication network, it is known to arrange a firewall function between a network to be protected and the other networks. Firewall devices having such a function perform packet filtering for determining passing availability packets based on information about source addresses, destination addresses, protocol numbers and the like of packets arrived from the outside, so as to prevent inappropriate packets from flowing.

As to a moving terminal which has a home link in an internal network protected by the above firewall device, when the moving terminal is moved and connected to an external network, its communication destination after movement is occasionally a communication terminal of the internal network. In this case, the moving terminal communicates with the communication destination via the firewall device, but packets from the moving terminal are destroyed by filtering by means of the firewall device unless the moving terminal sets permission for the packets transmitted from the external network to pass in the firewall device in advance.

Consideration is, therefore, given to that the moving terminal moves to the external network at an arbitrary point of time, and the firewall device can be set in advance so that packets related with all moving terminals which can move to the outside are allowed to pass. When this setting is carried out, however, exclusivity of the filtering is deteriorated, thereby causing inconvenience such that inappropriate packets easily flow.

As a method of solving the above inconvenience due to the movement of the moving terminal to the external network, an example is disclosed in Japanese Patent Application Laid-Open (JP-A) No. 10-070576, mentioned later. In firewall disclosed in JP-A-10-070576, when an internal network is accessed the moving terminal of an external network, a determination is made whether the moving terminal is a terminal which moves from the internal network, and when it is such a terminal, a filter is set so that communication of the terminal with the internal network is permitted. After the filter is set, a packet transmitted from the moving terminal reaches the internal network via an IP tunnel, and the packet is sent via a home agent of the internal network to an internal host of communication destination.

According to the method disclosed in JP-A-10-070576, destruction of packets from the moving terminal moved to the external network can be avoided by the firewall device, but packets transmitted from the moving terminal to the communication destination of the internal network are always sent via the home agent. For this reason, when convergence or failure, for example, occurs in a path which is used for a route of the packets, the packets to the communication destination is possibly delayed or erased.

### SUMMARY OF THE INVENTION

The present invention is devised in order to solve the above problem, and its object is to provide a method of dynamically setting filtering of a firewall device and simplifying communication between a moving terminal and communication destination via the firewall device.

A filtering method of the present invention includes the steps of: a step of a firewall device, which executes filtering of packets for an internal network to which a moving terminal belongs based on filter information, memorizing filter information which signify giving permission of pass through the firewall device to a control packet related with registration of position information about the moving terminal included in packets communicated between the internal network and an external network; a step of the moving terminal transmitting a control packet including position information of the moving terminal at the external network to a communication terminal as an communication destination of the internal network, when the moving terminal is connected to the external network; a step of the firewall device transferring the control packet transmitted from the moving terminal to the communication terminal based on the filter information; a step of the communication terminal registering the position information included in the control packet transferred from the firewall device and posting the registered position information to the firewall device; and a step of the firewall device updating the position information about the moving terminal in the filter information based on the position information posted from the communication terminal and memorizing in the filter information giving permission of passage through the firewall device to packets between the moving terminal and the communication terminal.

A firewall system of the present invention includes: a moving terminal; a firewall device that executes filtering of a packet for an internal network to which a moving terminal belongs based on filter information; and a communication terminal that is present in the internal network and is an communication destination of the moving terminal, wherein the moving terminal having a mobility processing section that, when the moving terminal is connected to an external network, transmits a control packet including position information about the moving terminal in the external network to the communication terminal, wherein the communication terminal has a database in which the position information about the moving terminal is stored, a mobility processing section that registers the position information about the moving terminal into the database based on the control packet transmitted from the moving terminal, and a position information posting section that posts the registered position information to the firewall device, wherein the firewall device has a packet filter processing section that executes the filtering, a database in which filter information signifying that a control packet related with registration of position information about the moving terminal included in packets communicated between the internal network and the external network is allowed to pass is stored, and a position information receiving section that updates the filter information in the database based on the position information posted from the communication terminal, wherein, when position information about the external network is posted as the position information about the moving terminal from the communication terminal, the firewall device memorizes in the filter information giving permission of passage through the firewall device to packets between the moving terminal and the communication terminal.

According to the present invention, when a packet is communicated between the moving terminal which moves to the external network and the communication terminal of the internal network, utilization of a home agent which manages the position information about the moving terminal is not necessary. As a result, the communication which realizes dynamic filtering by means of the firewall device can be simplified.

### BRIEF DESCRIPTION OF THE DRAWINGS

Fig. 1 is a block diagram illustrating a constitution of a firewall system according to an embodiment of the present invention; and
Fig. 2 is a block diagram illustrating a functional constitution of components according to the embodiment.

### DESCRIPTION OF THE PREFERRED EMBODIMENTS

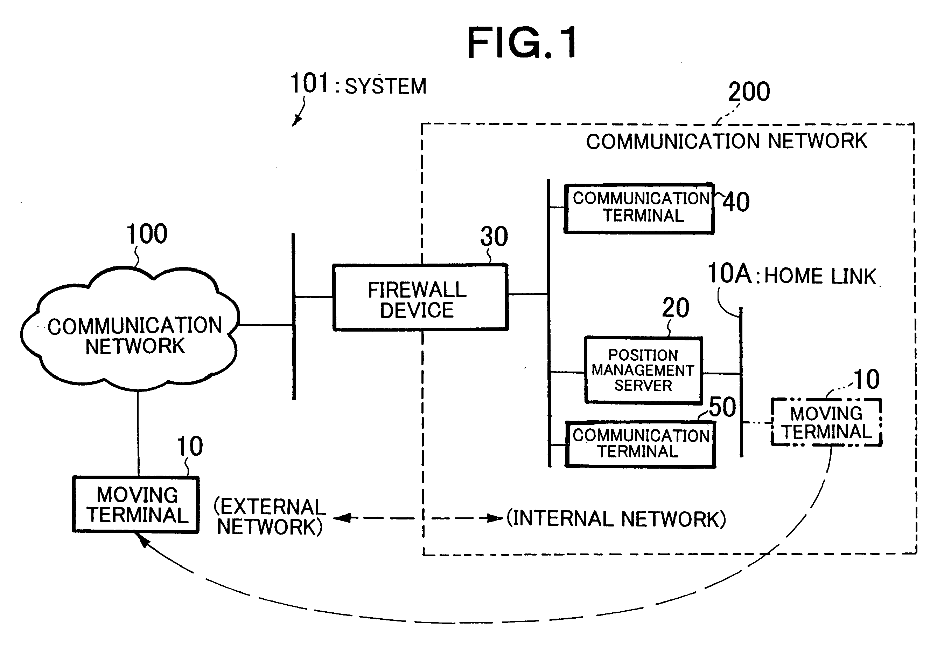

An embodiment of the present invention is explained in detail below with reference to the drawings. Fig. 1 is a block diagram illustrating a constitution of a firewall system according to the present invention. A system 101 of an embodiment has a communication network 200 as a sub network connected to a communication network 100 such as an internet via a firewall device 30. In the communication network 200, a moving terminal 10 whose home link 10A is present in the communication network 200, a position management server 20 that manages position information about the moving terminal 10, and communication terminals 40 and 50 as network nodes connected to the firewall device 30 are connected.

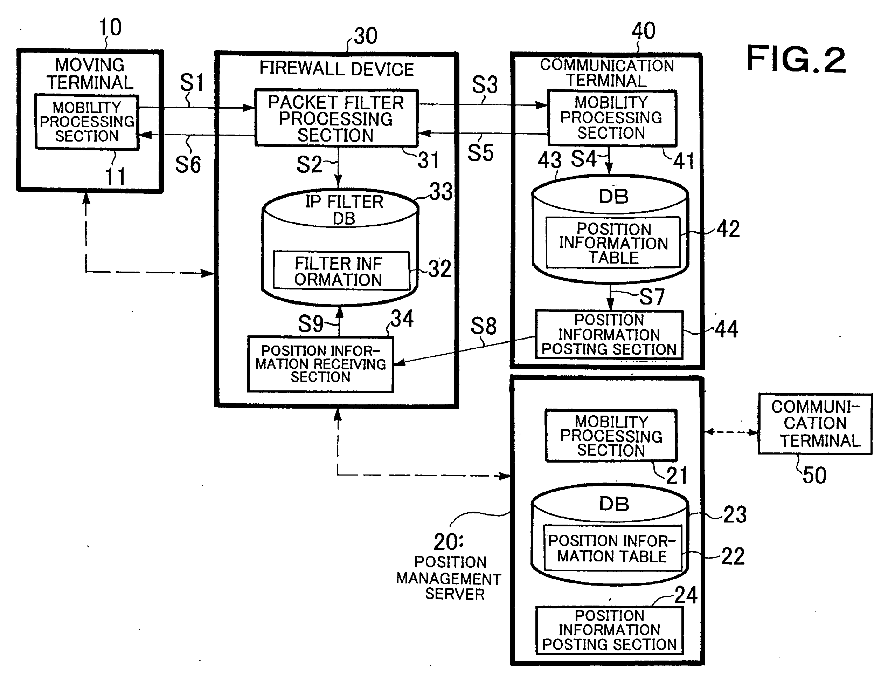

Fig. 2 illustrates an internal constitution of respective components in the system 101. The moving terminal 10 has a mobility processing section 11 as a functional constitution. The mobility processing section 11 transmits a position registration message and receives a position registration response message, mentioned later, based on protocols which support a position registration process according to movement of the moving terminal 10. As the above protocols, for example, conventionally-known mobile IP can be applied. The position registration message is a message to be used for posting position information about the moving terminal 10, and the position registration response message is a message which is used for positing a result of processing the position registration message to the moving terminal 10. In the embodiment, these messages related with the registration of the position information about the moving terminal 10 are treated as a control packet.

The firewall device 30 has a packet filter processing section 31, an IP filter database 33 that retains filter information 32, and a position information receiving section 34. The filter information 32 is information where information about source address, destination address, protocol number and the like stored in a packet is related with its processing format for the packet (permission for a packet to pass or discard of the packet). The packet filter processing section 31 operates to filter the packet received by the firewall device 30, and refers to the filter information 32 in the IP filter database 33 so as to allow the packet to pass or discard it. The position information receiving section 34 updates the filter information 32 based on the position information about the moving terminal 10 posted from the position management server 20 or the communication terminal 40.

The communication terminal 40 is a computer device which can be communication destination of the moving terminal 10, and has a mobility processing section 41, a database 43 having a position information table 42, and a position information posting section 44. The mobility processing section 41 receives a position registration message and transmits a position registration response message, mentioned later, based on protocols such as the mobile IP which support the position registration process according to the movement of the moving terminal 10. Further, the mobility processing section 41 executes a process for registering the position information about the moving terminal 10 into the position information table 42. The position information is control parameters, such as the address information about the moving terminal 10 and its valid period, which is used for the communication terminal 40 acquiring the position of the moving terminal 10. The position information posting section 43 operates to post the registered information to the position information receiving section 33 of the firewall device 30.

The position management server 20 operates as a so-called home agent which manages a current position of the moving terminal 10, and has the similar components to those of the communication terminal 40. That is to say, the position management server 20 has a mobility processing section 21, a database 23 which retains a position information table 22, and a position information posting section 24. The communication terminal 50 is a computer device which does not have a function for processing the protocols such as the mobile IP, and communicates with the moving terminal 10 which moves to the external network via the position management server 20.

An operating procedure of this embodiment is explained below. When the moving terminal 10 is in an initial state where it is connected to the home link 10A, a network administrator or the like sets the filter information 32 of the firewall device 30 in advance so that the control packet related with the moving terminal 10 is allowed to pass and the other packets are not allowed to pass. An explanation is given as to a procedure where the moving terminal 10 of the communication network 200 moves to the communication network 100 as the external network, and the communication network 100 communicates with the communication terminal 40 of the internal network as the communication destination as shown by an arrow in Fig. 1.

When the mobility processing section 11 detects that the self terminal moves to the external network, the moving terminal 10 creates and transmits a position registration message to communication terminal 40where the 40 as the communication destination is destination (step S1). The position registration message is a control packet which is transmitted directly to the communication terminal 40 via the firewall device 30, and includes the position information about the moving terminal 10 in the communication network 100 as the external network and its valid period. The message transmitted from the moving terminal 10 reaches the firewall device 30 via the network 100.

The packet filter processing section 31 of the firewall device 30 refers to the filter information 32 in the IP filter database 33 (step S2), and determines whether the received position registration message is allowed to pass. The position registration message is one kind of the control packet, and the permission for the control packet to pass is set in the filter information 32 in advance. For this reason, the packet filter processing section 31 determines that the received position registration message is allowed to pass so as to transfer it to the communication terminal 40 (step S3).

When the communication terminal 40 receives the position registration message transferred from the firewall device 30, the mobility processing section 41 confirms that it is a valid message, and registers the position information about the moving terminal 10 and its valid period described in the message into the position information table 42 in the database 43 (step S4). Further, a position registration response message which represents that the position information is registered is transmitted to the moving terminal 10 via the firewall device 30 (steps S5 and S6).

On the other hand, when the mobility processing section 41 registers the position information into the database 43 of the communication terminal 40 or the valid period of the registered position information passes, the database 43 requests the position information posting section 44 to post this state to the firewall device 30 (step S7). When the position information posting device 44 receives this request from the database 43, the position information posting device 44 posts the registered information or information which represents that the valid period passes to the firewall device 30 (step S8).

The position information receiving section 34 of the firewall device 30 updates the filter information 32 in the IP filter database 33 based on the information posted from the communication terminal 40 (step S9). Concretely, when the posting represents the registration of the position information about the moving terminal 10, the filter information 32 is set so that a packet where the position information is a source address and the address of the communication terminal 40 is a destination address is allowed to pass. After this setting, the firewall device 30 allows not only the control packet but also the packet transmitted from the moving terminal 10 of the external network to the communication terminal 40 of the internal network to pass.

Further, when the message represents that the valid period of the position information passes, the setting related with the position information in the filter information 32, namely, the setting of the permission for the packet to pass from the moving terminal 10 of the external network to the communication terminal 40 of the internal network is deleted. As a result, a masquerading inappropriate packet, which is transmitted from the external network to the moving terminal 10 after the valid period, can be prevented from intruding.

According to the embodiment, when the moving terminal 10 which moves to the external network communicates with the communication terminal 40 of the internal network, the state that the moving terminal 10 moves is posted from the communication terminal 40 to the firewall device 30, so that the filter information 32 is updated. For this reason, it is not necessary that the communication between the moving terminal 10 and the communication terminal 40 is made via the position management server 20 as the home agent. As a result, the route of the communication via the firewall device 30 can be simplified, and accordingly the packet can be communicated there between rapidly.

In the system 101 of Fig. 1, when the moving terminal 10 which moves to the external network communicates with the communication terminal 50 of the internal network, the position management server 20 as the home agent updates the filter information 32 of the firewall device 30. A schematic flow of this procedure is shown by an arrow of dotted line in Fig. 2. That is to say, when the moving terminal 10 transmits the position registration message to the position management server 20 after the movement of the self terminal is detected, the firewall device 30 permits the position registration message to pass based on the filter information 32 so as to transfer the message to the position management server 20.

The position management server 20 registers the address information about the moving terminal 10 and its valid period included in the transmitted position registration message into the position information table 22, and transmits the position registration response message to the moving terminal 10. Similarly to the position information posting section 44 of the communication terminal 40, when the position information is registered into the position information table 22 or the valid period of the position information passes, the position management server 20 posts this state to the firewall device 30. The position information receiving section 33 of the firewall device 30 updates the filter information 32 based on the posted information.

According to the above process, the filter information 32 is set so that the packet is allowed to pass from the moving terminal 10 of the external network to the internal network. After this setting, when the moving terminal 10 communicates with the communication terminal 50 of the internal network, the packet where the address of the home link 10A as the home address of the self terminal is a source address and the address of the communication terminal 50 is destination is encapsulated by a packet where a care-of-address is set as the source destination so that encapsulated packet is transmitted. The address of the position management server 20 is set in the care-of-destination address.

## Claims

1. A filtering method comprising:
a step of a firewall device, which executes filtering of packets for an internal network to which a moving terminal belongs based on filter information, memorizing filter information which signify giving permission of pass through the firewall device to a control packet related with registration of position information about the moving terminal included in packets communicated between the internal network and an external network;
a step of the moving terminal transmitting a control packet including position information of the moving terminal at the external network to a communication terminal as an communication destination of the internal network, when the moving terminal is connected to the external network;
a step of the firewall device transferring the control packet transmitted from the moving terminal to the communication terminal based on the filter information;
a step of the communication terminal registering the position information included in the control packet transferred from the firewall device and posting the registered position information to the firewall device; and
a step of the firewall device updating the position information about the moving terminal in the filter information based on the position information posted from the communication terminal and memorizing in the filter information giving permission of passage through the firewall device to packets between the moving terminal and the communication terminal.

2. The filtering method according to claim 1, further comprising:
a step of the moving terminal setting a valid period of the position information in the control packet to be transmitted to the communication terminal;
a step of the communication terminal registering the valid period with the position information included in the control packet from the moving terminal, and posting passed state of the valid period to the firewall device when the registered valid period passes; and
a step of the firewall device canceling the permission which was given to packets between the moving terminal and the communication terminal, when the posting about the passed state of the valid period from the communication terminal reaches.

3. A firewall system comprising:
a moving terminal;
a firewall device that executes filtering of a packet for an internal network to which a moving terminal belongs based on filter information; and
a communication terminal that is present in the internal network and is an communication destination of the moving terminal,
wherein the moving terminal having a mobility processing section that, when the moving terminal is connected to an external network, transmits a control packet including position information about the moving terminal in the external network to the communication terminal,
wherein the communication terminal has a database in which the position information about the moving terminal is stored, a mobility processing section that registers the position information about the moving terminal into the database based on the control packet transmitted from the moving terminal, and a position information posting section that posts the registered position information to the firewall device,
wherein the firewall device has a packet filter processing section that executes the filtering, a database in which filter information signifying that a control packet related with registration of position information about the moving terminal included in packets communicated between the internal network and the external network is allowed to pass is stored, and a position information receiving section that updates the filter information in the database based on the position information posted from the communication terminal,
wherein, when position information about the external network is posted as the position information about the moving terminal from the communication terminal, the firewall device memorizes in the filter information giving permission of passage through the firewall device to packets between the moving terminal and the communication terminal.

4. The firewall system according to claim 3, wherein
the moving terminal sets a valid period of the position information in the control packet to be transmitted to the communication terminal,
the communication terminal registers the valid period with the position information included in the control packet from the moving terminal, and posts passed state of the valid period to the firewall device when the registered valid period passes,
the firewall device cancels the permission which was given to packets between the moving terminal and the communication terminal, when the firewall device receives the posting about the passed state of the valid period from the communication terminal.

5. A firewall device that executes filtering of a packet for an internal network to which a moving terminal belongs based on filter information comprising:
a packet filter processing section that executes the filtering;
a database in which the filter information signifying that a control packet related with registration of position information about the moving terminal including in packets communicated between the internal network and an external network is allowed to pass is stored; and
a position information receiving section that updates the filter information in the database based on the position information posted from the communication terminal of the internal network,
wherein, when position information about the external network is posted as the position information about the moving terminal from the communication terminal, the position information receiving section memories in the filter information giving permission of passage through the firewall device to packets between the moving terminal and the communication terminal.

6. The firewall device according to claim 5, wherein the position information receiving section cancels the permission which was given to packets between the moving terminal and the communication terminal, when the firewall device receives the posting about a passed state of a valid period from the communication terminal.
